# EUROPÄISCHE PATENTANMELDUNG

(11) **EP 4 455 846 A1**
(43) Veröffentlichungstag der Anmeldung: **30.10.2024**
(21) Anmeldenummer: 23170642.5
(22) Anmeldetag: 28.04.2023
(51) Int. Cl.: G06F 3/0362, B60K 37/06

(54) **ANORDNUNG AUS EINER ELEKTRONISCHEN PIXELMATRIXANZEIGE UND DARAUF ANGEORDNETEM, DURCHBROCHENEM DREHSTELLER UND IN DESSEN DURCHBRUCH ANGEORDNETEM, OPTISCHEN ELEMENT SOWIE ZUGEHÖRIGE VERWENDUNG**

(71) Anmelder: Preh GmbH, 97616 Bad Neustadt a.d. Saale (DE)
(72) Erfinder: KRAMLICH, Andreas, 97616 Bad Neustadt a.d. Saale (DE)
(74) Vertreter: Lohmanns, Bernard

(57) **Zusammenfassung**

Die Erfindung betrifft eine Anordnung (1) aufweisend: einen Drehsteller (2), der einen Sockel (2b), ein am Sockel (2b) mittels Lagerungsmittel um eine Drehachse (D) drehbeweglich gelagertes, ringförmiges Betätigungsteil (2a) zur Dreheingabe durch einen Bediener (B) und Mittel zur Drehstellungsdetektion aufweist, wobei der Drehsteller (1) einen zentralen Durchbruch (9) aufweist;
eine elektronische Pixelmatrixanzeige (3), die eine Anzeigefläche (A) und eine die Anzeigefläche (A) überdeckende, transparente, äußere Schicht (3a) umfasst; wobei der Sockel (2b) auf der transparenten äußeren Schicht (3a) der elektronischen Pixelmatrixanzeige (3) angeordnet und daran festgelegt ist;
ein im zentralen Durchbruch (9) angeordnetes, optisches Element (4) aus transparentem Material mit einer der Anzeigefläche (A) zugewandten Rückfläche (4b), einer dem Bediener (B) zugewandten Sichtfläche (4a) und einer dem Sockel (2b) zugewandten Mantelfläche (4c), wobei das optische Element (4) angeordnet ist, dem Bediener (B) eine Durchsicht auf den unterhalb des Durchbruchs (9) liegenden Teil der Anzeigefläche (A) der elektronischen Pixelmatrixanzeige (3) zu ermöglichen; wobei das optische Element (4) den Sockel (2b) und das Betätigungsteil (2a) mit seiner Sichtfläche (4a) zumindest teilweise in einer axial von der elektronischen Pixelmatrixanzeige (2) wegweisenden Richtung überragt, wobei das optische Element (4) am Sockel (2b) durch eine stoffschlüssige Verbindung oder form- und/oder kraftschlüssig zusammenwirkende Verbindungsmittel (10) festgelegt ist; sowie zugehörige Verwendung.

## Beschreibung

Die Erfindung betrifft eine Anordnung, welche einen Drehsteller mit Mitteln zur Drehstellungsdetektion sowie eine elektronische Pixelmatrixanzeige, die eine Anzeigefläche und eine die Anzeigefläche überdeckende, äußere transparente Schicht aufweist, umfasst. Der Drehsteller weist ein Betätigungsteil, das drehbeweglich um eine Drehachse mittels Lagerungsmittel an der transparenten Schicht gelagert ist und einen zentralen Durchbruch zur Durchsicht auf einen wesentlichen Teil der vom Drehsteller überdeckten Anzeigefläche auf. Eine derartige Anordnung als Kombination aus mechanischem Drehsteller und elektronischer Pixelmatrixanzeige wird zunehmend beliebter, da einerseits aufgrund der flexiblen Anzeigemöglichkeiten der elektrischen Pixelmatrixanzeige dem Drehsteller vielfältige Funktionen und Funktionshinweise zugeordnet werden können und andererseits der Drehsteller mit seinem drehbeweglichen Betätigungsteil ein gewohntes haptisches Feedback liefert und leicht vom Fahrer ohne Sichtkontakt ertastet werden kann. Aufgrund der Anordnung des Drehstellers auf der in der Regel horizontal oder bezüglich des Schwerefeldes allenfalls schräg ausgerichteten, transparenten Schicht der elektrischen Anzeige besteht das Problem, dass die Durchsicht auf die Anzeigefläche bei nicht-senkrechter Aufsicht unzureichend ist. Es bietet sich daher die Anordnung eines optischen Elements innerhalb des Durchbruchs an, welches den Durchbruch möglichst gänzlich ausfüllen sollte. Problematisch dabei ist die dauerhafte Festlegung des optischen Elements, insbesondere wenn dessen dem Bediener zugewandte Sichtfläche den umgebenden Drehsteller in axialer, von der elektronischen Pixelmatrixanzeige Richtung zumindest teilweise überragt, um beispielsweise die seitliche Betrachtung der unterhalb des Durchbruchs liegenden Anzeigefläche zu verbessern und dadurch häufiger Berührung durch den Bediener ausgesetzt wird. Die dabei wirkenden Hebelkräfte können leicht dazu führen, dass das optische Element, das regelmäßig an der transparenten Schicht der elektronischen Pixelmatrixanzeige zur besseren optischen Ankopplung lediglich über eine transparente Klebstoffschicht festgelegt ist, los gehebelt wird, sich beim händischen Verdrehen des Betätigungsteils mit dreht oder gar verlustig geht und damit die optische Anzeige beeinträchtigt ist.

Vor diesem Hintergrund bestand Bedarf nach einer Anordnung, bei der das Risiko einer Beschädigung, insbesondere durch den Verlust des optischen Elements und/oder durch die Beeinträchtigung dessen optischer Ankopplung an die elektronische Pixelmatrixanzeige verringert ist. Diese Aufgabe wird durch eine Anordnung gemäß Anspruch 1 gelöst. Eine gleichermaßen vorteilhafte Verwendung ist Gegenstand des Verwendungsanspruchs. Die in den abhängigen Ansprüchen aufgeführten Merkmale können in beliebiger, technologisch sinnvoller Weise miteinander kombiniert werden und zweigen weitere Ausgestaltungen der Erfindung auf. Die Beschreibung, insbesondere im Zusammenhang mit den Figuren, charakterisiert und spezifiziert die Erfindung zusätzlich.

Die Erfindung betrifft eine Anordnung aus einem Drehsteller, einer elektronischen Pixelmatrixanzeige und einem optischen Element. Der Drehsteller weist einen Sockel, ein an dem Sockel mittels Lagerungsmittel um eine Drehachse drehbeweglich gelagertes ringförmiges Betätigungsteil zur Dreheingabe durch einen Bediener und Mittel zur Drehstellungsdetektion auf. Die Lagerungsmittel umfassen beispielsweise ein Wälz- oder Gleitlager. Der Drehsteller weist erfindungsgemäß einen zentralen Durchbruch, beispielsweise einen Durchbruch mit rundem Querschnitt, auf. Bevorzugt ist das optische Element bezüglich einer mit der Drehachse zusammenfallenden Achse rotationssymmetrisch ausgebildet. Erfindungsgemäß ist eine elektronische Pixelmatrixanzeige vorgesehen, die eine Anzeigefläche und eine die Anzeigefläche überdeckende, transparente, äußere Schicht umfasst. Beispielsweise handelt es sich um eine hintergrundbeleuchtete Flüssigkristallanzeige, beispielsweise im TFT-Aufbau, oder eine Anzeige in OLED-Bauweise. Die elektronische Pixelmatrixanzeige ist in einer Ausgestaltung berührungsempfindlich ausgebildet und weist bevorzugt eine transparente Elektrodenstruktur zur ortsaufgelösten kapazitiven Berührdetektion aus.

Die Mittel zur Drehstellungsdetektion sind beispielsweise ausgebildet, die Stellung berührungslos, wie kapazitiv oder optisch zu detektieren. Beispielsweise ist ein Drehstellungsgeber am Betätigungsteil festgelegt, der mit mehreren Elektroden kapazitiv zusammenwirkt, die am Sockel oder an der elektronischen Pixelmatrixanzeige festgelegt sind. Letztere sind beispielsweise Teil der transparenten Elektrodenstruktur, die zur ortausgelösten kapazitiven Berührdetektion auf der transparenten äußeren Schicht der elektronischen Pixelmatrixanzeige vorgesehen ist.

Der Sockel ist auf der äußeren Schicht der elektronischen Pixelmatrixanzeige angeordnet und an der elektronischen Pixelmatrixanzeige festgelegt. Der Sockel ist beispielsweise ringförmig ausgebildet. Beispielsweise ist ein Innenlager der Lagerungsmittel am Sockel festgelegt und eine Außenlager der Lagerungsmittel am Betätigungsteil festgelegt. Die äußere, transparente Schicht ist beispielsweise eine Kunststoffschicht, bevorzugt eine oberflächengehärtete Kunststoffschicht, um beispielsweise eine darunter liegende Elektrodenstruktur einer kapazitiven Sensorik oder die Polarisationsschicht der elektrischen Anzeige vor Beschädigung zu schützen. Noch bevorzugter handelt es sich bei der transparenten, äußeren Schicht um eine Schicht aus einem Glaswerkstoff.

Erfindungsgemäß ist das aus einem transparenten Material ausgebildete, optische Element im zentralen Durchbruch angeordnet und weist einer der Anzeigefläche zugewandte Rückfläche, eine dem Bediener zugewandte Sichtfläche und eine dem Sockel zugewandten Mantelfläche auf. Das transparente Material des optischen Elements ist beispielsweise ein Glaswerkstoff, insbesondere ein Borosilikatglas, Aluminiumsilikatglas oder Kalk-Natron-Floatgas, oder ein thermoplastischer, transparenter Werkstoff. Bevorzugt weist das transparente Material einen Brechungsindex n > 1 auf. Das optische Element ist beispielsweise in einem formgebenden Verfahren als Formling hergestellt.

Erfindungsgemäß ist das optische Element derart im Durchbruch angeordnet, dass dem Bediener eine Durchsicht auf den unterhalb des Durchbruchs liegenden Teil der Anzeigefläche der elektronischen Pixelmatrixanzeige ermöglicht ist. Dabei überragt das optische Element den Sockel und das Betätigungsteil des Drehstellers mit seiner Sichtfläche zumindest teilweise in einer axial von der elektronischen Pixelmatrixanzeige wegweisenden Richtung, um den seitlichen Blick auf den unterhalb des Durchbruchs liegenden Teil der Anzeigefläche der elektronischen Pixelmatrixanzeige zu erleichtern. Um die Befestigung des optischen Elements insbesondere für den Fall, dass bei Berührung der frei liegenden Sichtfläche starke Hebelkräfte wirken, zu verbessern und/oder um ein Mitdrehen des optischen Elements zu verhindern, ist erfindungsgemäß das optische Element am Sockel durch eine stoffschlüssige Verbindung, wie eine Klebstoffverbindung, oder durch form- und/oder kraftschlüssig zusammenwirkende Verbindungsmittel festgelegt.

Bevorzugt sind die Verbindungsmittel durch einen oder mehrere bezüglich der Drehachse in einer radial sich erstreckenden Richtung, beispielsweise nach Außen oder nach Innen weisenden, Vorsprung und jeweils eine zugehörige den jeweiligen Vorsprung formschlüssig aufnehmende Ausnehmung ausgebildet. Zusätzlich oder alternativ ist gemäß einer bevorzugten Ausgestaltung eine ferner über eine im Bereich der Rückfläche, zwischen dem optischen Element und der transparenten äußeren Schicht angeordnete, transparente Klebstoffschicht an der elektronischen Pixelmatrixanzeige festgelegt. Die Klebstoffschicht weist beispielsweise einen Brechungsindex n>1 auf. Im Vergleich zu einem Luftspalt sorgt die Klebstoffschicht für eine reflexionsmindernde und damit verbesserte optische Ankopplung des optischen Elements an die transparente Schicht der elektronischen Pixelmatrixanzeige.

Bevorzugt weisen die Verbindungsmittel mehrere sich gleichmäßig entlang eines auf die Drehachse bezogenen Umfangs des optischen Elements verteilt angeordnete Vorsprünge aufweisen, so dass das optische Element über die Vorsprünge zentriert wird, beispielsweise in eine koaxiale Lage mit der Drehachse des Drehstellers gezwungen wird. Bevorzugt steht der Vorsprung jeweils in der radial nach Außen weisenden Richtung von dem optischen Element vorsteht.

Bevorzugt ist auf die Mantelfläche eine Beschichtung aus einem reflexionsmindernden und/oder opaken und/oder metallischen Material aufgebracht. Dadurch wird die optische Erscheinung des optischen Elements aber auch die optische Wirkung des optischen Elements im Hinblick auf die Visualisierung derjenigen Anzeige, welche von dem im Durchbruch liegenden Teil der Anzeigefläche angezeigt ist, verbessert. Beispielsweise ist eine Beschichtung aus einem Thermoplast auf die Mantelfläche durch Vorder- oder Hinterspritzen aufgebracht. Beispielsweise ist eine metallische Beschichtung durch Gasphasenabscheidung auf der Mantelfläche aufgebracht.

Bevorzugt ist eine Komponente der Verbindungsmittel, wie der Vorsprung, durch die Beschichtung ausgebildet, insbesondere wenn die Beschichtung aus einem thermoplastischen Material ausgebildet ist.

Bevorzugt ist die Beschichtung derart ausgebildet, dass sie in der axial von der elektronischen Pixelmatrixanzeige wegweisenden Richtung und/oder in der radial nach Außen weisenden Richtung die Lagerungsmittel überragt, so dass letztere optisch nicht in Erscheinung treten, was den optischen Eindruck der Anordnung gefälliger macht und ferner den Blick des Betrachters nicht vom Anzeigeinhalt im Durchbruch ablenkt.

Bevorzugt ist vorgesehen, dass die Mantelfläche nicht den Sockel und nicht das Betätigungsteil in der axial von der elektronischen Pixelmatrixanzeige wegweisenden Richtung überragt.

Bevorzugt ist das optische Element so ausgebildet ist, dass zumindest für einen Abschnitt der Mantelfläche sich die zur Drehachse senkrechten Querschnitte sich mit zunehmendem Abstand von der elektronischen Pixelmatrixanzeige stetig vergrößern. Beispielsweise weitet sich das optische Element in Richtung seiner Sichtfläche hin auf, beispielsweise weist die Mantelfläche einen äußeren Abschnitt auf, der der Kegelmantelfläche eines umgekehrten Kegelstumpfes entspricht.

Bevorzugt ist der Sockel im Wesentlichen ringfömig ausgebildet, und es ist mindestens ein fluidleitender Kanal zur Verbindung des Durchbruchs mit einem den Drehsteller umgebenden Bereich vorgesehen. Beispielsweise ist der fluidleitende Kanal vorgesehen, die Verteilung und gegebenenfalls Entgasung eines zur Ausbildung der Klebstoffschicht zwischen das optische Element und die transparente Schicht eingebrachten Flüssigkeitsklebstoffs zu erleichtern. Der fluidleitende Kanal kann auch vorgesehen sein, das Ableiten von ungewollt eingedrungenen Flüssigkeiten, wie Reinigungsflüssigkeiten, zu ermöglichen.

Beispielsweise ist mindestens ein fluidleitender Kanal zwischen dem Sockel und der Mantelfläche des optischen Elements ausgebildet. Beispielsweise ist mindestens ein fluidleitender Kanal parallel zu Anzeigefläche, bevorzugt zwischen der transparenten äußeren Schicht und dem Sockel, ausgebildet.

Bevorzugt ist die Sichtfläche größer als die Rückfläche, welche beispielsweise eben ausgebildet ist. Bevorzugt ist die Sichtfläche konvex gekrümmt ausgebildet.

Die Erfindung betrifft ferner Verwendung der Anordnung in einer der zuvor beschriebenen Ausführungsformen in einem Kraftfahrzeug.

Die Erfindung wird anhand der nachfolgenden Figuren näher erläutert. Die Figuren sind dabei nur beispielhaft zu verstehen und stellen lediglich eine bevorzugte Ausführungsvariante dar. Es zeigen:
Figur 1 eine perspektivische Ansicht einer Ausführungsform der erfindungsgemäßen Anordnung;
Figur 2 eine zu Figur 1 gehörige Schnittansicht.

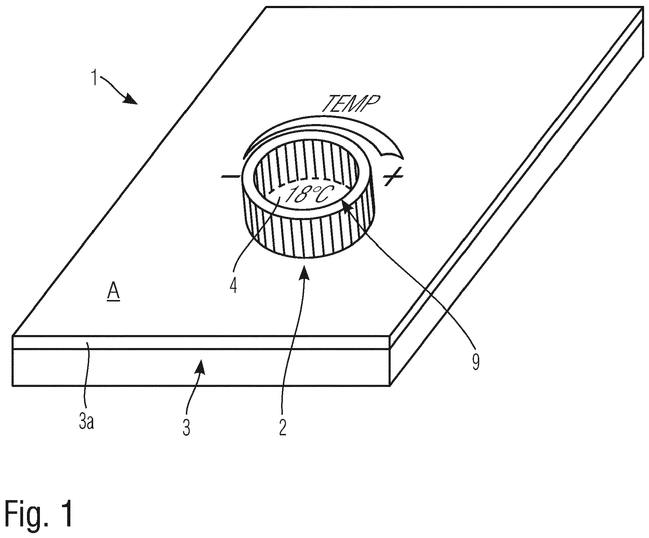

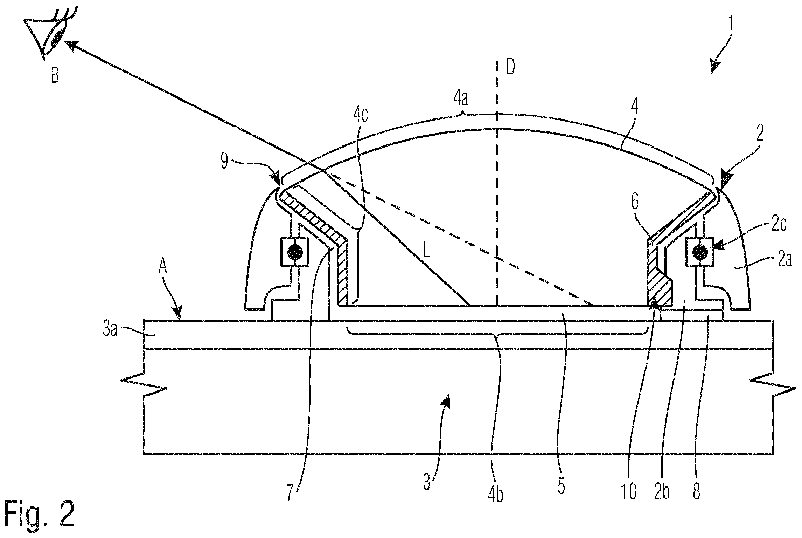

Die Erfindung betrifft eine Anordnung 1 aus einem Drehsteller 2, einer elektronischen Pixelmatrixanzeige 2 und einem optischen Element 4, wie es in Figur 1 gezeigt ist. Die elektronische Pixelmatrixanzeige 3 weist eine Anzeigefläche A und eine die Anzeigefläche A überdeckende, transparente, äußere Schicht 3a auf. Beispielsweise handelt es sich um eine hintergrundbeleuchtete Flüssigkristallanzeige, beispielsweise im TFT-Aufbau, oder eine Anzeige in OLED-Bauweise. Die elektronische Pixelmatrixanzeige 3 kann berührungsempfindlich ausgebildet sein und weist dann beispielsweise eine transparente, nicht dargestellte Elektrodenstruktur zur ortsaufgelösten kapazitiven Berührdetektion aus. Die äußere, transparente Schicht 3a ist beispielsweise eine Kunststoffschicht, bevorzugt eine oberflächengehärtete Kunststoffschicht, um beispielsweise die darunter liegende Elektrodenstruktur einer kapazitiven Sensorik oder die Polarisationsschicht der elektrischen Pixelmatrixanzeige 3 vor Beschädigung zu schützen. Noch bevorzugter handelt es sich bei der transparenten, äußeren Schicht um eine Schicht aus einem Glaswerkstoff. Das optische Element 4, welches aus einem transparenten Material ausgebildet ist, ist derart im Durchbruch 9 des Drehstellers 2 angeordnet, dass dem Bediener B eine Durchsicht auf den unterhalb des Durchbruchs 9 liegenden Teil der Anzeigefläche A der elektronischen Pixelmatrixanzeige 3 ermöglicht ist, so dass der unterhalb des Durchbruchs liegende Teil der Anzeige zur Visualisierung genutzt werden kann. Hier ergänzen sich beispielsweise die Anzeigeinhalte außerhalb des Drehstellers 2 und die unterhalb des Durchbruchs 9, so wird unterhalb des Durchbruchs 9 eine Vorwahltemperatur angezeigt, während außerhalb des Drehstellers eine Skalierungsmarkierung zur Erläuterung der Verstellrichtung des Drehstellers 2 angezeigt wird. Figur 2 zeigt den Aufbau der Anordnung 1, insbesondere des Drehstellers 2 im Detail. Der Drehsteller 2 weist einen Sockel 2b, ein an dem Sockel 2b mittels Lagerungsmittel 2c um eine Drehachse D drehbeweglich gelagertes ringförmiges Betätigungsteil 2a zur Dreheingabe durch den Bediener B und nicht dargestellte Mittel zur Drehstellungsdetektion auf. Die Lagerungsmittel 2c sind hier als Wälzlager ausgebildet. Wie gezeigt ist ein Innenlager der Lagerungsmittel 2c am Sockel 2b festgelegt und eine Außenlager der Lagerungsmittel 2c am Betätigungsteil 2a festgelegt. Der Sockel 2b ist auf der transparenten, äußeren Schicht 3a der elektronischen Pixelmatrixanzeige 3 angeordnet und festgelegt. Der Sockel 2b ist beispielsweise ringförmig ausgebildet.

Die nicht dargestellten Mittel zur Drehstellungsdetektion sind beispielsweise ausgebildet, die Stellung berührungslos, wie kapazitiv oder optisch zu detektieren. Beispielsweise ist ein Drehstellungsgeber am Betätigungsteil 2a festgelegt, der mit mehreren Elektroden kapazitiv zusammenwirkt, die Teil der transparenten Elektrodenstruktur sind, die zur ortausgelösten kapazitiven Berührdetektion auf der transparenten äußeren Schicht 3a der elektronischen Pixelmatrixanzeige 3 vorgesehen ist.

Das im zentralen Durchbruch 9 angeordnete, optische Element 4 weist eine der Anzeigefläche A zugewandte Rückfläche 4b, die dem Bediener B zugewandte Sichtfläche 4a und eine dem Sockel 2b zugewandten Mantelfläche 4c auf. Das transparente Material des optischen Elements 4 ist beispielsweise ein Glaswerkstoff, insbesondere ein Borosilikatglas, Aluminiumsilikatglas oder Kalk-Natron-Floatgas, oder ein thermoplastischer, transparenter Werkstoff. Bevorzugt weist das transparente Material einen Brechungsindex n > 1 auf. Das optische Element 4 ist beispielsweise in einem formgebenden Verfahren als Formling hergestellt. Das optische Element 4 ist über eine im Bereich der Rückfläche 4b, zwischen dem optischen Element 4 und der transparenten, äußeren Schicht 3a angeordnete, transparente Klebstoffschicht 5 an der elektronischen Pixelmatrixanzeige 3 festgelegt. Die Klebstoffschicht 5 weist beispielsweise einen Brechungsindex n>1 auf. Im Vergleich zu einem Luftspalt sorgt die Klebstoffschicht 5 für eine reflexionsmindernde und damit verbesserte optische Ankopplung des optischen Elements 4 an die transparente Schicht 3a der elektronischen Pixelmatrixanzeige 3.

Wie aus Figur 2 zu erkennen ist, überragt das optische Element 4 den Sockel 2b und das Betätigungsteil 2a des Drehstellers 2 mit seiner Sichtfläche 4a in einer axial von der elektronischen Pixelmatrixanzeige 2 wegweisenden Richtung, um den seitlichen Blick auf den unterhalb des Durchbruchs 9 liegenden Teil der Anzeigefläche A der elektronischen Pixelmatrixanzeige 2 zu erleichtern, wobei die Sichtfläche 4a größer als die Rückfläche 4b ausfällt, wobei die Sichtfläche 4a konvex gekrümmt ausgebildet ist, um einen Vergrößerungseffekt, wie durch den Strahlengang L angedeutet, zu erreichen.

Um die Befestigung des optischen Elements 4 insbesondere für den Fall, dass bei Berührung der frei liegenden Sichtfläche 4a starke Hebelkräfte wirken, zu verbessern und/oder um ein Mitdrehen des optischen Elements 4 zu verhindern, ist erfindungsgemäß das optische Element 4 am Sockel 2b durch eine stoffschlüssige Verbindung, wie eine Klebstoffverbindung, oder, wie gezeigt ist, durch form- und/oder kraftschlüssig zusammenwirkende Verbindungsmittel 10 festgelegt.

Hier umfassen die Verbindungsmittel 10 mehrere bezüglich der Drehachse D in einer radial sich erstreckenden Richtung nach Außen weisende Vorsprünge und jeweils mehrere, den jeweiligen Vorsprung formschlüssig aufnehmende Ausnehmungen. Die Verbindungsmittel 10 sind gleichmäßig entlang eines auf die Drehachse D bezogenen Umfangs des optischen Elements 4 verteilt angeordnet, so dass das optische Element 4 über die Vorsprünge zentriert wird, d.h. in eine koaxiale Lage mit der Drehachse D des Drehstellers 2 gezwungen wird.

Wie ferner in Figur 2 gezeigt, ist auf die Mantelfläche 4c eine Beschichtung 6 aus einem reflexionsmindernden und/oder opaken und/oder metallischen Material aufgebracht. Dadurch wird die optische Erscheinung des optischen Elements 4 aber auch die optische Wirkung des optischen Elements 4 im Hinblick auf die Visualisierung derjenigen Anzeige, welche von dem im Durchbruch 9 liegenden Teil der Anzeigefläche A angezeigt ist, verbessert. Beispielsweise ist eine Beschichtung 6 aus einem Thermoplast auf die Mantelfläche 4c durch Vorder- oder Hinterspritzen aufgebracht. Beispielsweise ist eine metallische Beschichtung 6 durch Gasphasenabscheidung auf der Mantelfläche 4c aufgebracht.

Dabei ist die Beschichtung 6 derart ausgebildet, dass sie in der axial von der elektronischen Pixelmatrixanzeige 3 wegweisenden Richtung und/oder in der radial nach Außen weisenden Richtung die Lagerungsmittel 2c überragt, so dass letztere optisch nicht in Erscheinung treten, was den optischen Eindruck der Anordnung 1 gefälliger macht und ferner den Blick des Betrachters B nicht vom Anzeigeinhalt im Durchbruch 9 ablenkt. Dabei ist ferner vorgesehen, dass die Mantelfläche 4c nicht den Sockel 2b und nicht das Betätigungsteil 2a in der axial von der elektronischen Pixelmatrixanzeige 3 wegweisenden Richtung überragt, um minimale Spaltmaße zwischen Drehsteller 2 und optischem Element 4 einhalten zu können.

Um den seitlichen Einblick für den Betrachter B zu verbessern, ist das optische Element 4 so ausgebildet ist, dass zumindest für einen äußeren Abschnitt der Mantelfläche 4c die zur Drehachse D senkrechten Querschnitte sich mit zunehmendem Abstand von der elektronischen Pixelmatrixanzeige 3 stetig vergrößern, so weitet sich das optische Element 4 in Richtung seiner Sichtfläche 4a in Form eines umgedrehten Kegelstumpfes auf.

Der Sockel 2b ist im Wesentlichen ringfömig ausgebildet, und es sind mehrere fluidleitende Kanäle 7, 8 zur Verbindung des Durchbruchs 9 mit einem den Drehsteller 2 umgebenden Bereich vorgesehen. Beispielsweise ist der Kanal 7, 8 jeweils vorgesehen, die Verteilung und gegebenenfalls Entgasung eines zur Ausbildung der Klebstoffschicht 5 zwischen das optische Element 4 und die transparente Schicht 5 eingebrachten Flüssigkeitsklebstoffs zu erleichtern. Der fluidleitende Kanal 7, 8 kann auch vorgesehen sein, das Ableiten von ungewollt eingedrungenen Flüssigkeiten, wie Reinigungsflüssigkeiten, zu ermöglichen. So ist ein erster fluidleitender Kanal 8 zwischen dem Sockel 2b und der Mantelfläche 2c des optischen Elements 4 ausgebildet. Ferner ist ein zweiter fluidleitender Kanal 8 parallel zu Anzeigefläche A, zwischen der transparenten äußeren Schicht 3a und dem Sockel 2b ausgebildet.

## Patentansprüche

1. Anordnung (1) aufweisend:
einen Drehsteller (2), der einen Sockel (2b), ein am Sockel (2b) mittels Lagerungsmittel um eine Drehachse (D) drehbeweglich gelagertes, ringförmiges Betätigungsteil (2a) zur Dreheingabe durch einen Bediener (B) und Mittel zur Drehstellungsdetektion aufweist, wobei der Drehsteller (1) einen zentralen Durchbruch (9) aufweist;
eine elektronische Pixelmatrixanzeige (3), die eine Anzeigefläche (A) und
eine die Anzeigefläche (A) überdeckende, transparente, äußere Schicht (3a) umfasst;
wobei der Sockel (2b) auf der transparenten äußeren Schicht (3a) der elektronischen Pixelmatrixanzeige (3) angeordnet und daran festgelegt ist;
ein im zentralen Durchbruch (9) angeordnetes, optisches Element (4) aus transparentem Material mit einer der Anzeigefläche (A) zugewandten Rückfläche (4b), einer dem Bediener (B) zugewandten Sichtfläche (4a) und einer dem Sockel (2b) zugewandten Mantelfläche (4c), wobei das optische Element (4) angeordnet ist, dem Bediener (B) eine Durchsicht auf den unterhalb des Durchbruchs (9) liegenden Teil der Anzeigefläche (A) der elektronischen Pixelmatrixanzeige (3) zu ermöglichen; wobei das optische Element (4) den Sockel (2b) und das Betätigungsteil (2a) mit seiner Sichtfläche (4a) zumindest teilweise in einer axial von der elektronischen Pixelmatrixanzeige (2) wegweisenden Richtung überragt, wobei das optische Element (4) am Sockel (2b) durch eine stoffschlüssige Verbindung oder form- und/oder kraftschlüssig zusammenwirkende Verbindungsmittel (10) festgelegt ist.

2. Anordnung (1) gemäß Anspruch 1, wobei das optische Element (4) ferner über eine im Bereich der Rückfläche (4b), zwischen dem optischen Element (4) und der transparenten, äußeren Schicht (3a) angeordnete, transparente Klebstoffschicht (5) an der elektronischen Pixelmatrixanzeige (3) festgelegt ist.

3. Anordnung (1) gemäß einem der vorhergehenden Ansprüche, wobei die Verbindungsmittel (10) mindestens einen bezüglich der Drehachse (D) sich in einer radialen Richtung erstreckenden Vorsprung und jeweils eine zugehörige den jeweiligen Vorsprung formschlüssig aufnehmende Ausnehmung aufweisen.

4. Anordnung (1) gemäß dem vorhergehenden Anspruch, wobei die Verbindungsmittel (10) mehrere sich gleichmäßig entlang eines auf die Drehachse (D) bezogenen Umfangs des optischen Elements (4) verteilt angeordnete Vorsprünge aufweisen.

5. Anordnung (1) gemäß einem der beiden vorhergehenden Ansprüche, wobei der Vorsprung der Verbindungsmittel (10) in der radial nach Außen weisenden Richtung von dem optischen Element (4) vorsteht.

6. Anordnung (1) gemäß einem der vorhergehenden Ansprüche, wobei auf der Mantelfläche (4c) eine Beschichtung (6) aus einem reflexionsmindernden und/oder opaken und/oder metallischen Material aufgebracht ist.

7. Anordnung (1) gemäß einem der vorhergehenden Ansprüche, wobei eine Komponente der Verbindungsmittel (10), wie der Vorsprung, durch die Beschichtung ausgebildet ist.

8. Anordnung (1) gemäß einem der beiden vorhergehenden Ansprüche, wobei die Beschichtung (10) in der axial von der elektronischen Pixelmatrixanzeige (3) wegweisenden Richtung und/oder in der radial nach Außen weisenden Richtung die Lagerungsmittel (2c) überragt.

9. Anordnung (1) gemäß einem der vorhergehenden Ansprüche, wobei das optische Element (4) so angeordnet ist, dass dessen Mantelfläche (4c) nicht den Sockel (2b) und nicht das Betätigungsteil (2a) in der axial von der elektronischen Pixelmatrixanzeige (3) wegweisenden Richtung überragt.

10. Anordnung (1) gemäß einem der vorhergehenden Ansprüche, wobei das optische Element (4) bezüglich einer mit der Drehachse zusammenfallenden Achse rotationssymmetrisch ausgebildet ist.

11. Anordnung (1) gemäß einem der vorhergehenden Ansprüche, wobei das optische Element (4) so ausgebildet ist, dass zumindest für einen Abschnitt der Mantelfläche (4c) sich die zur Drehachse (D) senkrechten Querschnitte sich mit zunehmendem Abstand von der elektronischen Pixelmatrixanzeige (3) stetig vergrößern.

12. Anordnung (1) gemäß einem der vorhergehenden Ansprüche, wobei der Sockel (2b) im Wesentlichen ringfömig ausgebildet ist und mindestens ein fluidleitender Kanal (7, 8) zur Verbindung des Durchbruchs (9) mit einem den Drehsteller (2) umgebenden Bereich vorgesehen ist.

13. Anordnung (1) gemäß dem vorhergehenden Anspruch, wobei mindestens ein fluidleitender Kanal (7) zwischen dem Sockel (2b) und der Mantelfläche (4c) des optischen Elements (4) ausgebildet ist.

14. Anordnung (1) gemäß einem der vorhergehenden Ansprüche, wobei mindestens ein fluidleitender Kanal (8) parallel zu Anzeigefläche (A), bevorzugt zwischen der transparenten äußeren Schicht (3a) und dem Sockel (2b), ausgebildet ist.

15. Anordnung (1) gemäß einem der vorhergehenden Ansprüche, wobei die Sichtfläche (4a) größer als die Rückfläche (4b) ist.

16. Anordnung (1) gemäß einem der vorhergehenden Ansprüche, wobei die Sichtfläche (4a) konvex gekrümmt ausgebildet ist.

17. Anordnung (1) gemäß einem der vorhergehenden Ansprüche, wobei das transparente Material des optischen Elements (4) einen Brechungsindex n>1 aufweist.

18. Verwendung der Anordnung (1) gemäß einem der vorhergehenden Ansprüche in einem Kraftfahrzeug.
